# EUROPEAN PATENT SPECIFICATION

(11) **EP 3 568 895 B1**
(45) Date of publication and mention of the grant of the patent: **26.10.2022**
(21) Application number: 18700822.2
(22) Date of filing: 12.01.2018
(51) Int. Cl.: H02J 50/20, H02J 50/00

(54) **IMPROVED POWER MANAGEMENT CIRCUITRY FOR ENERGY-HARVESTING DEVICES**
VERBESSERTE LEISTUNGSVERWALTUNGSSCHALTUNG FÜR ENERGIEGEWINNUNGSVORRICHTUNGEN
ENSEMBLE DE CIRCUITS DE GESTION DE PUISSANCE AMÉLIORÉ POUR DISPOSITIFS DE COLLECTE D'ÉNERGIE

(30) Priority: 13.01.2017 GB 201700656
(43) Date of publication of application: 20.11.2019
(73) Proprietor: Freevolt Technologies Limited, London W10 5AD (GB)
(72) Inventor: REVELANT, Alessandro, London Greater London W10 5AD (GB); VINCO, Alessandro, London Greater London W10 5AD (GB); FRANCISCATTO, Bruno, London Greater London W10 5AD (GB)
(74) Representative: Pitchford, James Edward
(86) International application number: PCT/GB2018/050090
(87) International publication number: WO 2018/130847

(56) References cited:
- WO-A2-2013/041356
- US-A1- 2011 006 727
- US-A1- 2012 286 935
- US-A1- 2016 134 150

## Description

### FIELD OF THE INVENTION

The present invention relates to electronic circuitry for use in energy-harvesting devices. It is particularly applicable, but by no means limited, for use in wireless sensor devices.

### BACKGROUND TO THE INVENTION

Electrical devices require electrical power to operate. Wireless electrical devices often use a battery as a source of electrical power. However, as a consequence, the length of time for which the device can be used tends to be limited by the life of the battery (i.e. the length of time until the battery needs to be replaced or recharged).

To reduce dependency on battery life, wireless energy-harvesting devices have been developed which harvest energy from an external source, in order to power the device and/or to charge an on-board battery. For example, certain energy-harvesting devices are configured to harvest energy from an electromagnetic field in which the device is located. Such an electromagnetic field may be produced by a radio frequency (RF) source. For example, an RF transmitter used for broadcast or wireless telecommunications purposes may act as a source of harvestable energy (or "harvesting source").

Such an energy-harvesting wireless device may be a telecommunications device of some kind. Alternatively the purpose of the device may be unrelated to telecommunications. The device may be permanently located within the electromagnetic field in use, or it may only be present in the electromagnetic field intermittently or occasionally (e.g. for the specific purpose of charging an on-board battery).

State-of-the-art energy-harvesting wireless devices include, in the device's energy-harvesting circuitry, a power management module (PMM) for delivering harvested electrical power to associated circuitry and/or to an on-board battery, to charge it. In such state-of-the-art devices the PMM is always active, even when there is no power available from the harvesting source; in this state the internal power consumption of the PMM represents a load for the battery which may affect the battery life.

There is therefore a desire to regulate the operation of a PMM in an energy-harvesting device, to reduce the extent to which it represents a load for the battery.

Background art is provided in US 2016/134150 A1, US 2011/006727 A1 and WO2013/041356 A2.

US 2016/134150 A1 discloses a system and method for self-harvesting energy from a wireless device and supplementing the battery power of the wireless device using the self-harvested energy, including the steps of: collecting at least a portion of radio frequency signals transmitted by the wireless device; converting the collected radio frequency signals from radio frequency signals to direct current energy; further converting the direct current energy to energy compatible with charging requirements for a battery electrically connected to the wireless device; and transferring the compatible energy to the battery of the wireless device through a wireless device interface in order to add the compatible energy to the battery.

US 2011/006727 A1 discloses a personal solar appliance that collects and stores solar energy. A method of charging a battery from a solar cell is disclosed that includes applying power from a bootstrap circuit when the battery has a very low state of charge or the solar cell has output below a threshold; and applying power from a maximum power point circuit when the battery and the solar cell provide power above the threshold.

WO2013/041356 A2 discloses a device and method for harvesting energy from solar cells according to the preamble of claims 1 and 5.

### SUMMARY OF THE INVENTION

The present invention provides an energy-harvesting device as defined in Claim 1 of the appended claims. Also provided is a method as defined in Claim 5. Details of certain embodiments are set out in the dependent claims.

According to a first aspect of the present invention there is provided an energy-harvesting device comprising: a power management module; and detector circuitry for controlling the operation of the power management module, the detector circuitry comprising: an input for receiving an electrical input representative of a level of harvestable power; and a trigger coupled to the input and operable to generate an activation signal for switching on the power management module; wherein the trigger is configured to generate the activation signal upon detecting at least a threshold level of harvestable power, and thereby switch on the power management module; and wherein the trigger is configured not to generate the activation signal upon detecting less than the threshold level of harvestable power, and thereby switch off the power management module; wherein the trigger comprises a non-inverting Schmitt trigger; wherein the power management module is configured to perform maximum power point tracking in a sampling time-window that is immediately at the start-up of the power management module by the trigger, synchronized with the presence of input harvestable power; and wherein the input of the detector circuitry is configured to receive an electrical input from a radio frequency, RF, antenna, representative of a level of harvestable power from an RF source.

Accordingly, it is possible to operate the power management module (PMM) only when a sufficient level of harvestable power (i.e. at least the threshold level) is available, and to keep the PMM off when the level of harvestable power is too low (i.e. below the threshold level). This in turn reduces the power consumption of the PMM.

The non-inverting Schmitt trigger may comprise a nanopower comparator.

The detector circuitry may be incorporated in the power management module.

The energy-harvesting device may be, for example, a wireless sensor device for use in a wireless sensor network (e.g. the so-called "Internet of Things" or "IoT"). However, the present principles are also applicable to other types of energy-harvesting devices, as those skilled in the art will appreciate.

According to a second aspect of the invention there is provided a method of controlling the operation of a power management module of an energy-harvesting device, the method comprising: receiving an electrical input representative of a level of harvestable power; generating an activation signal for switching on the power management module upon detecting at least a threshold level of harvestable power, and thereby switching on the power management module; and not generating the activation signal upon detecting less than the threshold level of harvestable power, and thereby switching off the power management module; wherein the generating of the activation signal is performed by a non-inverting Schmitt trigger; wherein the method further comprises performing maximum power point tracking in a sampling time-window that is immediately at the start-up of the power management module by the trigger, synchronized with the presence of input harvestable power; and wherein the electrical input is received from a radio frequency, RF, antenna, representative of a level of harvestable power from an RF source.

As discussed above, the non-inverting Schmitt trigger may comprise a nanopower comparator. The energy-harvesting device may be, for example, a wireless sensor device.

### BRIEF DESCRIPTION OF THE DRAWINGS

Embodiments of the invention will now be described, by way of example only, and with reference to the drawings in which:
Figure 1 is a schematic diagram of an energy-harvesting device having a source detector circuit coupled to a power management module (PMM), which in turn is coupled to associated circuitry;
Figure 2 is an example of an RF source detector circuit; and
Figure 3 shows the RF source detector circuit of Figure 2 coupled to exemplary PMM circuitry (an equivalent model for PMM circuitry is shown).

In the figures, like elements are indicated by like reference numerals throughout.

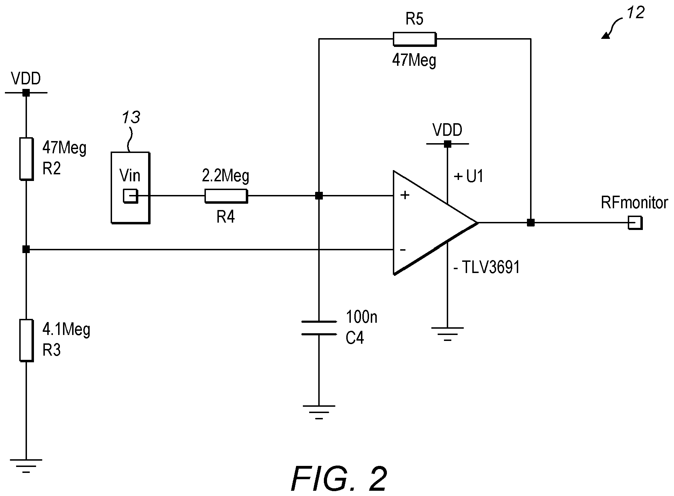

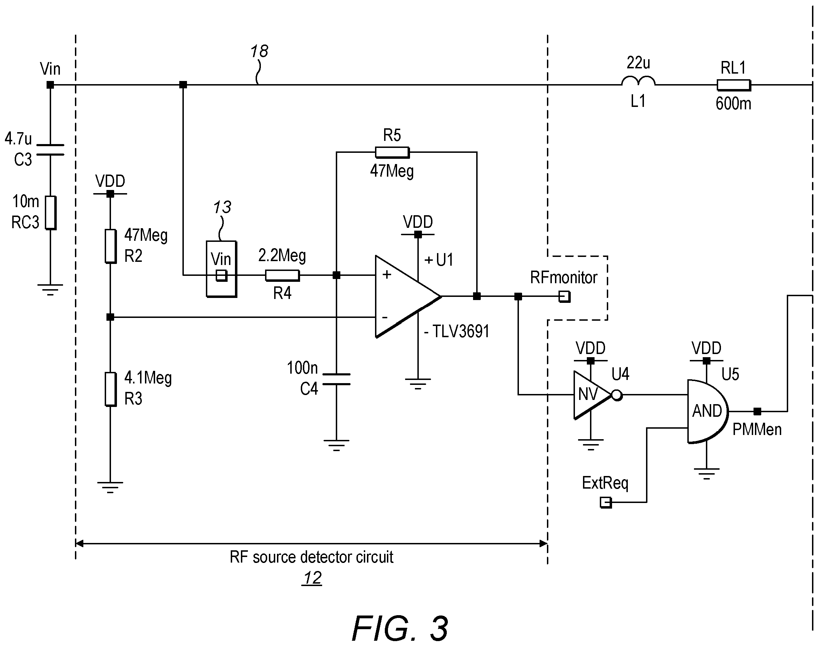

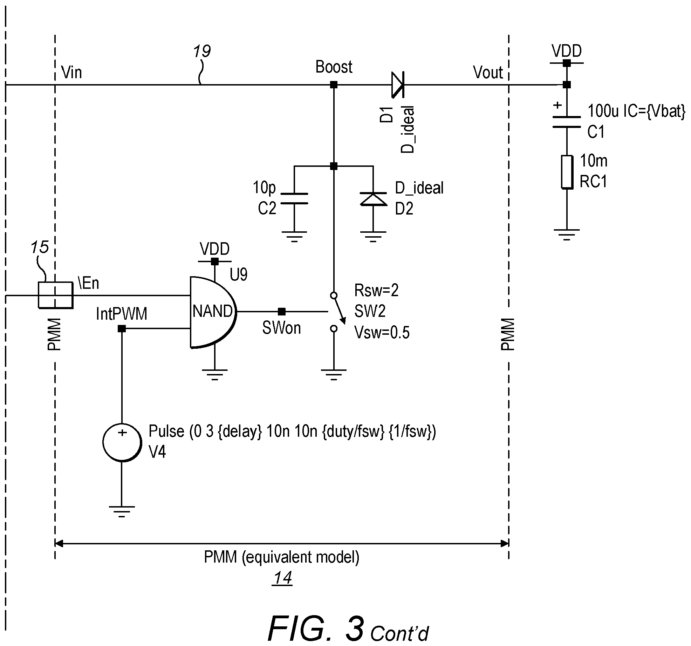

It is to be emphasised that the component values and component reference codes provided in Figures 2 and 3 are merely by way of example. As those skilled in the art will appreciate, other component values, and components having alternative reference codes, may be used instead.

### DETAILED DESCRIPTION OF PREFERRED EMBODIMENTS

The present embodiments represent the best ways known to the Applicant of putting the invention into practice. However, they are not the only ways in which this can be achieved.

### Overview

The present work provides detector circuitry for use with a power management module (PMM) within a wireless energy-harvesting device. The detector circuity is configured to switch on the PMM only when a sufficient level of harvestable power (i.e. at least a threshold level) is available from the harvesting source, at an input to the detector circuitry. The detector circuity is also configured to keep the PMM off when the level of harvestable power from the source, at the input to the detector circuitry, is too low (i.e. below the threshold level). Thus, this avoids PMM power consumption due to continuous source monitoring and associated processing activities (e.g. Maximum Power Point Tracking (MPPT) action and internal logic consumption).

For energy harvesters that present fast power oscillation in the time domain (as with RF sources), embodiments of the present invention improve the MPPT too. As the PMM is activated by the source detector circuitry only when there is sufficient available power at the input to the detector circuitry, the sampling time-window of the MPPT (which happens immediately at the start-up of the PMM) is synchronized with the presence of the input power. In this way the proper open circuit voltage of the source is sampled and the input voltage can be adjusted exactly at the Maximum Power Point (MPP) by the PMM.

Embodiments will be described in relation to the harvesting of energy from an RF source (e.g. a broadcast transmitter or a wireless telecommunications transmitter).

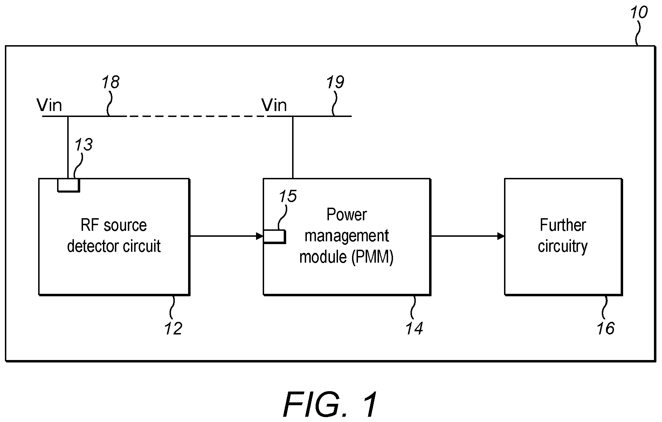

Thus, Figure 1 illustrates a wireless energy-harvesting device 10 having an RF detector circuit 12 coupled to a PMM 14. The PMM 14 is operably configured to deliver harvested electrical power to further circuitry 16 and/or to an on-board storage element such as a battery or capacitor (not illustrated), to charge it.

The RF detector circuit 12 includes an input 13 coupled to a trigger. The input 13 receives an electrical input from line 18, which is coupled to an RF antenna of the wireless device. The trigger is operable to generate an activation signal upon detecting a sufficient level of harvestable power (i.e. at least a threshold level) via the input 13. The activation signal is sent via suitable interface circuitry to an enabler input 15 of the PMM 14, to switch the PMM 14 on. When switched on, the PMM 14 is then able to harvest electrical power from line 19, which is also coupled to the RF antenna of the wireless device. The PMM 14 can then deliver the harvested power to the further circuitry 16 and/or on-board storage element as noted above.

In a presently-preferred embodiment the wireless energy-harvesting device 10 is a wireless sensor for use in a wireless sensor network (e.g. the so-called "Internet of Things" or "IoT"). Thus, the further circuitry 16 may include sensing means (e.g. for sensing temperature, pressure, or some other parameter(s)), data storage means, data processing means, and a transmitter for sending the sensed data elsewhere within the wireless sensor network.

The trigger does not generate an activation signal upon detecting an insufficient level of harvestable power (i.e. less than the threshold level) via the input 13 - in which case the PPM 14 is kept off.

### Source detector circuit

Figure 2 is an example of an RF source detector circuit 12 in more detail. The RF source detector circuit 12 of Figure 2 is implemented as a voltage detector configured as a non-inverting Schmitt trigger. The principles of Schmitt triggers will be familiar to those skilled in the art of analogue electronics.

The RF source detector circuit 12 of Figure 2 is configured as a non-inverting Schmitt trigger in order to:
- achieve proper start and stop thresholds;
- minimize the power consumption - high resistor values and an ultra-low power integrated circuit may be used; this topology allows the circuit to work without an external voltage reference, which significantly affects the power budget;
- avoid interferences in the matching between rectifier and PMM; and
- avoid unintended modification of the system status, e.g. the PMM switching on in the event of too short a power peak.

In the circuit of Figure 2, the following components are used to form the non-inverting Schmitt trigger:
U1: nanopower comparator (in this example, Texas Instruments' TLV3691)
R2, R3, R4, R5: resistors (example resistance values are given in MΩ)
C4: capacitor (an example capacitance value is given in nF)

In alternative embodiments, different implementations could be used for the source detector circuit 12, including a current detector. However, we have found that a non-inverting Schmitt trigger works very well. Other circuits we tested gave less good current consumption while also affecting the matching between the rectifier and the PMM.

### Connection of the source detector circuit to the PMM

The RF source detector circuit 12 is connected via appropriate interface circuitry to an enabler input 15 (e.g. an enable pin) of the PMM 14, in order to manage the status of the PMM (on: power conversion; off: completely off).

To illustrate this, by way of example, the overall electrical scheme shown in Figure 3 shows the RF source detector circuit 12 coupled to an equivalent model of a PMM 14.

### Experimental demonstration and results

In Table 1 below are indicated the output power (Pₒᵤₜ) and output current (Iₒᵤₜ) of an experimental system at different levels of RF input power (Pᵢₙ). V_{batt} denotes the voltage of the battery (which was used as the power storage element in these tests; another type of storage element, such as a capacitor, may be used instead). In detail, a positive power/current means that the system is a load for the battery; vice versa, negative power/current means that the system is able to recharge the battery. The two scenarios reported in the table are "PMM only" (i.e. a standard state-of-the-art arrangement, without an RF detector circuit) and "RF detector + PMM" (i.e. an arrangement including an RF detector circuit, in accordance with an embodiment of the present invention).

Considering the output power of the PMM, it is possible to notice that the system is activated only when there is enough power at the source to achieve the recharging condition (the current is negative, so it is flowing in the battery). On the other hand, it is important to notice that the power consumption of the system is lower in all the other cases.

**Table 1 - Power consumptions**

| | | *PMM only* | | | *RF detector* + *PMM* | | | |
|---|---|---|---|---|---|---|---|---|
| V_{batt} | RF Pᵢₙ | Pₒᵤₜ | Iₒᵤₜ | Status [1] | Pₒᵤₜ | Iₒᵤₜ | Status [2] | Notes |
| [V] | [dBm] | [µW] | [nA] | | [µW] | [nA] | | |
| 3.7 | -40 | 2.564 | 693 | Sleep | 0.673 | 182 | Off | No power from source |
| | -15.8 | 1.210 | 327 | Active | 0.596 | 161 | Off | Low power |
| | -12.9 | -1.240 | -335 | Active | -0.459 | -124 | Active | Activation threshold |
| | -8.2 | -13.194 | -3566 | Active | -12.391 | -3349 | Active | High power |
| | -20 | 2.449 | 662 | Sleep | 0.574 | 155 | Off | Deactivation threshold |

Key:
Status [1]: "Active" = boost on; "Sleep" = PMM sleep
Status [2]: "Active" = boost on; "Off" = no detection

In these measurements no load was applied to the PMM (the worst case for comparison). The present embodiments also avoid any further power consumption from the load (even if forced in deep sleep mode) by switching off completely its power supply.

In order to demonstrate the impact of an embodiment of the present invention in a real loT application, a power budget of the two scenarios was calculated. For both scenarios was considered:
- a lithium battery of 150mA / 3.7V
- a typical loT load with microcontroller start-up plus a BLE (Bluetooth Low Energy) data transmission

In the first scenario (the standard state-of-the-art arrangement, with the PMM only, without an RF detector circuit) the power consumptions and the battery life time expected are set out in Table 2 below:

**Table 2 - Battery life with standard arrangement (no RF detector circuit)**

| *PMM only* | | | | | |
|---|---|---|---|---|---|
| V_{batt} | PMM | Active load | Active time | Activations per day | **Battery Life** |
| [V] | [µA] | [µA] | [ms] | | **[days]** |
| 3.7 | 0.800 | 11700 | 1.6 | 10 | **427** |

In the second scenario, in which an embodiment of the invention is implemented, the power consumptions and the expected battery life are set out in Table 3 below:

**Table 3 - Battery life with PMM and RF detector circuit**

| *RF detector* + *PMM* | | | | | |
|---|---|---|---|---|---|
| V_{batt} | RF detector + PMM | Active load | Active time | Activations per day | **Battery Life** |
| [V] | [µA] | [µA] | [ms] | | **[days]** |
| 3.7 | 0.300 | 11700 | 1.6 | 10 | **1110** |

Thus, it can be seen that, through implementing an embodiment of the present invention, a significantly longer battery life can be achieved for the loT device.

The current consumption of a standard state-of-the-art PMM arrangement is around 700nA, whereas the current consumption of an embodiment of the present invention (including an RF detector circuit) is around 200nA (both measured with no input power available). Thus, the present embodiment allows a reduction of 70% of the harvester power consumption during the standby condition (with no input power available).

### Possible modifications and alternative embodiments

Detailed embodiments have been described above, together with some possible modifications and alternatives. As those skilled in the art will appreciate, a number of additional modifications and alternatives can be made to the above embodiments whilst still benefiting from the inventions embodied therein.

For example, in the above embodiments, the energy-harvesting device in which the detector circuitry is employed (in conjunction with a PMM) is a wireless sensor device for use in a wireless sensor network. However, other types of energy-harvesting devices may be produced which employ the present detector circuitry principles, together with a PMM.

Although, in the above embodiments, the detector circuitry is shown as separate from (but coupled to) the PMM, in other embodiments the detector circuitry may be incorporated in the PMM.

## Claims

1. An energy-harvesting device (10) comprising:
a power management module (14); and
detector circuitry (12) for controlling the operation of the power management module (14), the detector circuitry (12) comprising:
an input (13) for receiving an electrical input representative of a level of harvestable power; and
a trigger coupled to the input (13) and operable to generate an activation signal for switching on the power management module (14);
wherein the trigger is configured to generate the activation signal upon detecting at least a threshold level of harvestable power, and thereby switch on the power management module (14); and
wherein the trigger is configured not to generate the activation signal upon detecting less than the threshold level of harvestable power, and thereby switch off the power management module (14);
wherein the trigger comprises a non-inverting Schmitt trigger;
**characterised in that**
the power management module (14) is configured to perform maximum power point tracking in a sampling time-window that is immediately at the start-up of the power management module (14) by the trigger, synchronized with the presence of input harvestable power; and
wherein the input of the detector circuitry (12) is configured to receive an electrical input from a radio frequency, RF, antenna, representative of a level of harvestable power from an RF source.

2. The energy-harvesting device according to claim 1, wherein the non-inverting Schmitt trigger comprises a nanopower comparator.

3. The energy-harvesting device according to claim 1 or claim 2, wherein the detector circuitry (12) is incorporated in the power management module (14).

4. The energy-harvesting device according to any preceding claim, being a wireless sensor device.

5. A method of controlling the operation of a power management module (14) of an energy-harvesting device (10), the method comprising:
receiving an electrical input representative of a level of harvestable power;
generating an activation signal for switching on the power management module (14) upon detecting at least a threshold level of harvestable power, and thereby switching on the power management module (14); and
not generating the activation signal upon detecting less than the threshold level of harvestable power, and thereby switching off the power management module (14);
wherein the generating of the activation signal is performed by a non-inverting Schmitt trigger;
**characterised in that**
the method further comprises performing maximum power point tracking in a sampling time-window that is immediately at the start-up of the power management module (14) by the trigger, synchronized with the presence of input harvestable power; and
wherein the electrical input is received from a radio frequency, RF, antenna, representative of a level of harvestable power from an RF source.

6. The method according to claim 5, wherein the non-inverting Schmitt trigger comprises a nanopower comparator.

7. The method according to claim 5 or claim 6, wherein the energy-harvesting device (10) is a wireless sensor device.

## Patentansprüche

1. Eine Energiegewinnungsvorrichtung (10) umfassend:
ein Energieverwaltungsmodul (14); und
eine Detektorschaltung (12) zur Steuerung des Betriebs des Energieverwaltungsmoduls (14), wobei die Detektorschaltung (12) umfasst:
einen Eingang (13) zum Empfangen eines elektrischen Eingangssignals, das einen Pegel an gewinnbarer Energie darstellt; und
einen Auslöser, der mit dem Eingang (13) gekoppelt ist und ein Aktivierungssignal zum Einschalten des Energieverwaltungsmoduls (14) erzeugen kann;
wobei der Auslöser so konfiguriert ist, dass er das Aktivierungssignal erzeugt, wenn er mindestens einen Schwellenwert für die erntbare Energie erfasst, und dadurch das Energieverwaltungsmodul (14) einschaltet; und
wobei der Auslöser so konfiguriert ist, dass er das Aktivierungssignal nicht erzeugt, wenn er weniger als den Schwellenwert der erntbaren Energie feststellt, und dadurch das Energieverwaltungsmodul (14) ausschaltet;
wobei der Trigger einen nicht-invertierenden Schmitt-Trigger umfasst;
**dadurch gekennzeichnet, dass** das Energieverwaltungsmodul (14) so konfiguriert ist, dass es, synchronisiert mit dem Vorhandensein von erntefähiger Eingangsleistung, die Verfolgung des maximalen Leistungspunktes in einem Abtastzeitfenster durchführt, das unmittelbar beim Start des Energieverwaltungsmoduls (14) durch den Auslöser liegt; und
wobei der Eingang der Detektorschaltung (12) so konfiguriert ist, dass er ein elektrisches Eingangssignal von einer Hochfrequenzantenne, RF-Antenne, empfängt, das einen Pegel der erntbaren Energie von einer RF-Quelle darstellt.

2. Die Energiegewinnungsvorrichtung nach Anspruch 1, wobei der nichtinvertierende Schmitt-Trigger einen Nanostromkomparator umfasst.

3. Die Energiegewinnungsvorrichtung nach Anspruch 1 oder Anspruch 2, wobei die Detektorschaltung (12) in das Energiemanagementmodul (14) integriert ist.

4. Die Energiegewinnungsvorrichtung nach einem der vorhergehenden Ansprüche, die eine drahtlose Sensorvorrichtung ist.

5. Ein Verfahren zur Steuerung des Betriebs eines Energieverwaltungsmoduls (14) einer Energiegewinnungsvorrichtung (10), wobei das Verfahren umfasst:
Empfangen eines elektrischen Eingangssignals, das für das Niveau der erntbaren Energie repräsentativ ist;
Erzeugen eines Aktivierungssignals zum Einschalten des Energieverwaltungsmoduls (14) bei Erfassen mindestens eines Schwellenwerts der erntbaren Energie und dadurch Einschalten des Energieverwaltungsmoduls (14); und
Nicht-Erzeugen des Aktivierungssignals, wenn weniger als der Schwellenwert der erntbaren Leistung festgestellt wird, und dadurch Ausschalten des Energieverwaltungsmoduls (14);
wobei die Erzeugung des Aktivierungssignals durch einen nicht-invertierenden Schmitt-Trigger erfolgt;
**dadurch gekennzeichnet, dass** das Verfahren ferner die Durchführung der Verfolgung des Punktes maximaler Leistung in einem Abtastzeitfenster umfasst, das, synchronisiert mit dem Vorhandensein von erntbarer Eingangsleistung, unmittelbar beim Start des Energieverwaltungsmoduls (14) durch den Auslöser liegt; und
wobei der elektrische Eingang von einer Hochfrequenzantenne, RF-Antenne, empfangen wird, die einen Pegel der erntefähigen Leistung von einer RF-Quelle darstellt.

6. Verfahren nach Anspruch 5, wobei der nichtinvertierende Schmitt-Trigger einen Nanostromkomparator umfasst.

7. Verfahren nach Anspruch 5 oder Anspruch 6, wobei die Energiegewinnungsvorrichtung (10) eine drahtlose Sensorvorrichtung ist.

## Revendications

1. Dispositif de récupération d'énergie (10) comprenant :
un module de gestion de puissance (14) ; et
une circuiterie de détection (12) pour commander le fonctionnement du module de gestion de puissance (14), la circuiterie de détection (12) comprenant :
une entrée (13) pour recevoir une entrée électrique représentative d'un niveau de puissance récupérable ; et
un déclencheur couplé à l'entrée (13) et fonctionnel pour générer un signal d'activation pour allumer le module de gestion de puissance (14) ;
le déclencheur étant configuré pour générer le signal d'activation lors de la détection d'au moins un niveau seuil de puissance récupérable, et ainsi allumer le module de gestion de puissance (14) ; et
le déclencheur étant configuré pour ne pas générer le signal d'activation lors de la détection de moins du niveau seuil de puissance récupérable, et ainsi éteindre le module de gestion de puissance (14) ;
le déclencheur comprenant un déclencheur de Schmitt non inverseur ;
le dispositif étant **caractérisé en ce que** le module de gestion de puissance (14) est configuré pour réaliser un suivi de point de puissance maximale dans une fenêtre de temps d'échantillonnage qui est immédiatement au démarrage du module de gestion de puissance (14) par le déclencheur, synchronisé avec la présence d'une puissance récupérable d'entrée ; et
l'entrée de la circuiterie de détection (12) étant configurée pour recevoir, en provenance d'une antenne radioélectrique (RF), une entrée électrique représentative d'un niveau de puissance récupérable d'une source RF.

2. Dispositif de récupération d'énergie selon la revendication 1, dans lequel le déclencheur de Schmitt non inverseur comprend un comparateur à nanopuissance.

3. Dispositif de récupération d'énergie selon la revendication 1 ou 2, dans lequel la circuiterie de détection (12) est incorporé dans le module de gestion de puissance (14).

4. Dispositif de récupération d'énergie selon l'une quelconque des revendications précédentes, étant un dispositif capteur sans fil.

5. Procédé de commande du fonctionnement d'un module de gestion de puissance (14) d'un dispositif de récupération d'énergie (10), le procédé consistant à :
recevoir une entrée électrique représentative d'un niveau de puissance récupérable ;
générer un signal d'activation pour allumer le module de gestion de puissance (14) lors de la détection d'au moins un niveau seuil de puissance récupérable, et ainsi allumer le module de gestion de puissance (14) ; et
ne pas générer le signal d'activation lors de la détection de moins du niveau seuil de puissance récupérable, et ainsi éteindre le module de gestion de puissance (14) ;
la génération du signal d'activation étant réalisée par un déclencheur de Schmitt non inverseur ;
le procédé étant **caractérisé en ce qu'**il consiste en outre à réaliser un suivi de point de puissance maximale dans une fenêtre de temps d'échantillonnage qui est immédiatement au démarrage du module de gestion de puissance (14) par le déclencheur, synchronisé avec la présence d'une puissance récupérable d'entrée ; et
l'entrée électrique étant reçue en provenance d'une antenne radioélectrique (RF) et étant représentative d'un niveau de puissance récupérable d'une source RF.

6. Procédé selon la revendication 5, dans lequel le déclencheur de Schmitt non inverseur comprend un comparateur à nanopuissance.

7. Procédé selon la revendication 5 ou 6, dans lequel le dispositif de récupération d'énergie (10) est un dispositif capteur sans fil.
